# EUROPEAN PATENT SPECIFICATION

(11) **EP 0 456 097 B1**
(45) Date of publication and mention of the grant of the patent: **10.01.1996**
(21) Application number: 91107045.6
(22) Date of filing: 30.04.1991
(51) Int. Cl.: B60T 7/08, B60T 11/16

(54) **Device for the emergency and parking braking of a vehicle**
Not- und Feststelllbremsvorrichtung eines Fahrzeugs
Dispositif de freinage de secours et de stationnement d'un véhicule

(30) Priority: 11.05.1990 IT 6734890
(43) Date of publication of application: 13.11.1991
(73) Proprietor: FIAT AUTO S.p.A., I-10135 Torino (IT)
(72) Inventor: Maccari, Riccardo, I-10100 Torino (IT)
(74) Representative: Jorio, Paolo

(56) References cited:
- DE-A- 3 045 888
- DE-A- 3 522 211
- GB-A- 1 295 955
- US-A- 3 680 314

## Description

The present invention relates to a device for carrying out the emergency braking and the parking braking of a vehicle, in particular of a motor vehicle .

The emergency braking and the parking braking of a motor vehicle are known to be carried out at present by means of what is called the " hand brake ", which consists of a lever mounted inside the passenger compartment of the vehicle and which controls, by means of a tension rod, the mechanical operation of respective caliper/cylinder brakes of the wheels on the corresponding disks/drums ; these devices can be those also controlled by the ( hydraulic )service brake of the vehicle, that is to say by auxiliary devices specially provided . Once the hand brake is engaged, a rachet gear which, under the tension of the rod which links the lever to the calipers, keeps the lever in a lifted position prevents the disengagement . In order to disengage the hand brake the load on the rachet gear is to be removed by putting the tension rod under tension later and the pawl of the rachet gear released from the corresponding sector gear by means of a pusher placed on the lever handle .

Yet the well-known aforedescribed device is not without drawbacks . For example it is in a position to develop a reduced braking force which, if it is sufficient to keep the vehicle at a stop on a gentle slope (parking braking function), presents a reduced braking capacity for emergency braking (in case the main braking system does not work).

In order to overcome such a drawback hydraulic parking brakes have been proposed, such as that shown in DE-A-3045888 and, more generally speaking, hydraulic emergency braking systems have been proposed such that shown in US-A-3680314, wherein a pump is connected in parallel to the main hydraulic circuit by means of a three-way valve.
Nevertheless, such systems are bulky and complex and of difficult assembly. In particular, the emergency brake of US-A-3680314 acts on the all four wheel of the vehicle and requires the use of a three-way valve for each wheel, which is very expensive.

The object of the invention is to provide a device for the emergency and parking braking of a vehicle which, though presenting a simple structure and a reduced weight, can develop high braking forces. Another object of the invention is to provide a braking device of the above mentioned type which can directly operate on the service brake calipers without requiring controls in parallel of the latter or the presence of an auxiliary equipment.

Said objects are attained according to the invention which relates to a device for the emergency and parking braking of a vehicle, as defined in Claim 1.

The invention will be more apparent from the non-limiting description of an embodiment thereof given by way of example, with reference to the accompanying drawings in which:
Figure 1 is an exploded, perspective view of the main mechanical components of the braking device according to the invention ;
Figure 2 diagrammatically illustrates a service braking system of a vehicle provided with the device according to the invention ; and
Figure 3 is a sectional view, to an enlarged scale, of a detail of an element composing the device according to the invention .

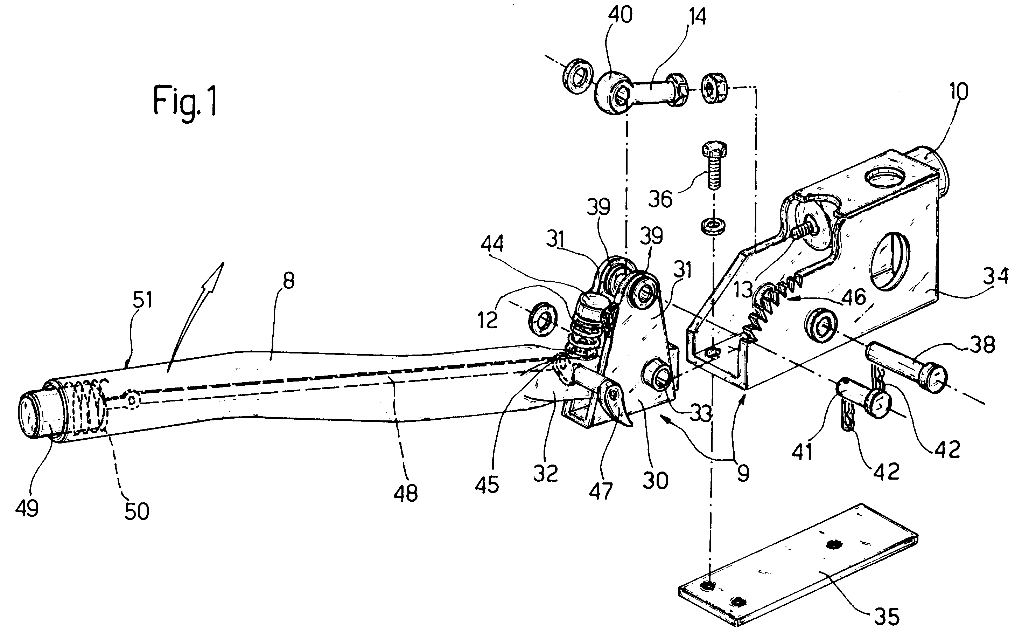

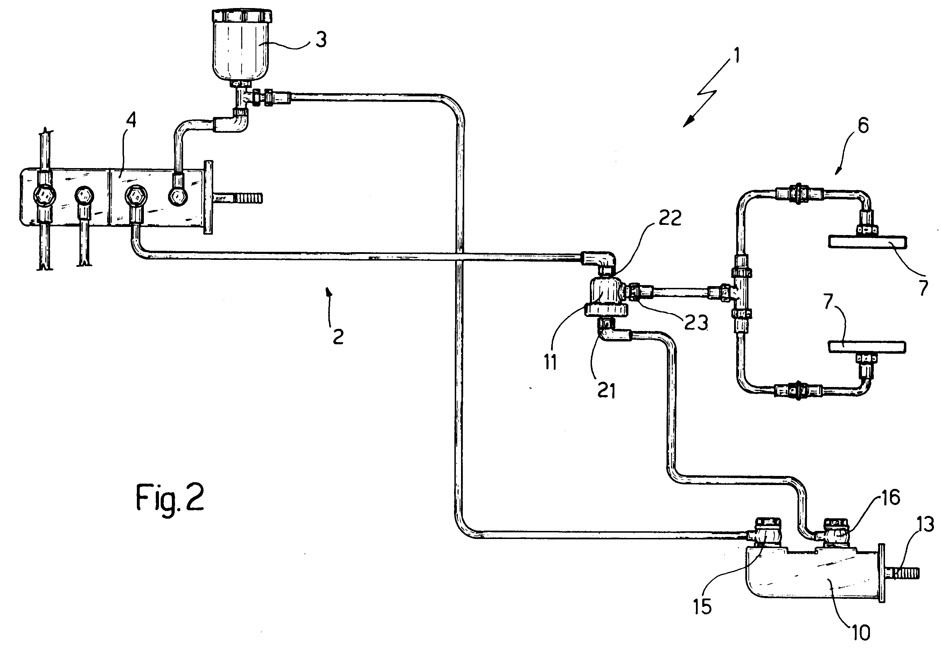

In Figure 1 and 2 the reference numeral 1 indicates a well-known hydraulic service braking system of a vehicle of any well-known type, in particular a motor vehicle, not shown for simplicity ; the system 1 comprises a main braking circuit 2 comprising an oil tank 3, a master cylinder 4 being part of a well-known servo brake , not shown for simplicity, and a braking circuit 6 of a rear axis of the vehicle, operating on well-known, respective service brakes 7, illustrated in the shape of blocks for simplicity ,of the rear wheels of the vehicle . Moreover, the system 1 also comprises, as an integral part of it, an emergency and parking braking device partly illustrated in Figure 1 and partly in Figure 2 ; this device mainly comprises a control lever 8 mountable inside the passenger compartment of the vehicle and liftable by hand, a well-known rachet gear 9, engageable subsequent to the lifting of the lever 8 and able to prevent the latter from lowering, means to disengage the rachet gear 9, and a hydraulic pump 10 linked to the lever 8 in an articulated manner so as to be controlled by the lifting of the latter and connected in deviation with the braking circuit of the rear axis 6 by means of a three-way valve 11 . In particular, the lifting of the lever 8 is bucked by a spring 12 which, therefore, bucks the rachet gear 9 so as to keep it under tension while the lever is lifted .

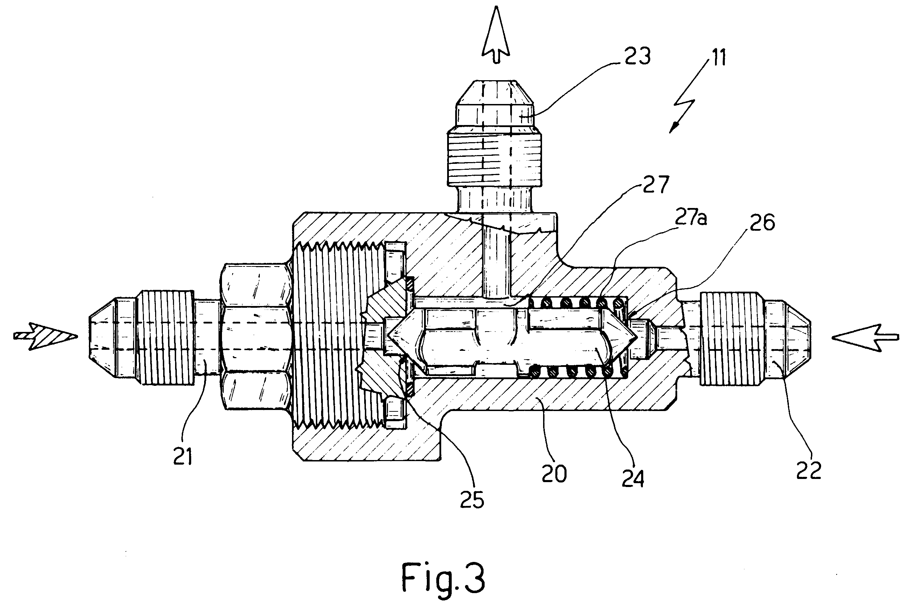

The hydraulic pump 10 is operated by the slipping of a threaded control rod 13, which is linked to the lever 8 in an articulated manner by means of a tension rod 14 ; moreover, the pump 10 presents a feed connection 15 connected, in deviation in relation to the main braking circuit 2, with the oil tank 3, and a delivery 16 connected, through the valve 11, with the braking circuit 6 of the rear axis ; in particular, the valve 11 is used to selectively link the braking circuit 6 of the rear wheels to the pump 10 and to the main circuit 2, so that the very service brakes 7 of the wheels of the vehicle rear axis are selectively operated either by the pump 10 or by the pump 4 of the main braking circuit 2 . The three-way valve 11 ( Figure 3 ) comprises a U-shaped connecting body which presents two opposing, mutually coaxial inlets 21, 22 and an outlet 23 placed at right angle in relation to the axis of the inlets 21, 22 ; the latter are respectively linked, the inlet 22 to the main braking circuit and the inlet 21 to the delivery 16 of the pump 10 ; on the contrary, the outlet 23 is linked to the braking circuit 6 of the rear axis . Inside the body 20, in a chamber 27 coaxial to the inlets 21, 22, there is slidingly mobile a shuttle 24, the opposite extremities of which are arranged to fluid-tight cooperate with respective sealing seats 25, 26 corresponding to the inlets 21, 22 to selectively open/close the communication between them and the chamber 27, and on which the pressure generated by the pump 4 and the pressure genarated by the pump 10 respectively operate . In the position illustrated, the shuttle 24 , kept in position by a spring 27a, keeps the inlet 21 closed and, simultaneously, enables the inlet 22 to communicate with the outlet 23 through the chamber 27 ; in the opposite position, not shown for simplicity, the shuttle 24 reverses the connections by closing the inlet 22 and connecting the inlet 21 with the outlet 23 .

According to the non-limiting embodiment illustrated, the lever 8 is idle-hinged within a U-shaped stirrup 30 delimited by respective substantially triangular side walls 31 : in particular, an extreme end 32 of the lever 8 is fulcrumed on a transverse tubular pin 33 fitted through the walls 31 on corresponding lower parts of the latter ; in that way the lever 8 and the stirrup 30 are rigidly coupled and reciprocally rotating, being able to part from one another as two scissors blades ; the stirrup 30 is in its turn idle-hinge-holded by a second stirrup 34, fixed, rigidly mountable by means of screws on a fixed support plate 35 within the passenger compartment and holding the pump 10 secured in the proper position ; in particular, the stirrup 30 is hinged to the stirrup 34, coaxial to the hinging axis of the lever 8 on the stirrup 30 itself, for example by means of a pin 38 fitted through the stirrup 34 and housed within the tubular pin 33 ; on the upper part, on a vertex 39 of the triangular walls 31, opposite the bottom side, the open part of the U-shaped stirrup 30 is hinge-linked to a head of the tension rod 14, for example by means of a pin 41 ; respective split pins 42 axially lock the pins 38, 41 once they are installed. In that way, the stirrup 30 is linked to the control rod of the pump 10 in an articulated manner and eccentrically in relation to its hinging axis 38 .

According to the invention, on the stirrup 30 there is cantilever-fastened, in a rigid manner (for example welded), in the direction of the lever 8, a shoulder consisting of a cap 44 ; between the latter and a supporting cone 44 rigid with the lever 8 there is inserted the spring 12, in the present case a helical spring, so as to be pack-tightened between the lever 8 and the stirrup 30 and, therefore, to be able to keep them apart from one another ; the rachet gear 9 is partly holded by the fixed stirrup 34, on which there is laterally provided a sector gear 46 rigid with it, and partly by the lever 8 the extremity 32 of which is laterally cantilever-provided with a pawl 47 engaging the sector gear 46 ; in order to control-disengage the rachet gear 9 the pawl 47 is linked, by means of a well-known driving gear 48 housed within the lever 8, to a release pusher 49 mobile against the action of a spring 50 and placed at the extremity of a handle 51 of the lever 8 opposite the extremity 32 .

In use, the braking power produced by the pump 4 with the cooperation of the spring 27a normally keeps the shuttle 24 in the position illustrated in Figure 3 and the lever is kept lowered almost horizontally, substantially in the position illustrated in Figure 1 ; in that way the pressurized oil sent by the pump 4 runs from the circuit 2 to the circuit 6, through the valve 11, operating the vehicle hydraulic service brakes 7 whenever necessary . When one wants to stop the vehicle on a slope, that is to say when the main braking pump 4 is not operating, the user may obtain the parking or, respectively, the emergency braking by pulling the lever 8 . In particular, the user will grasp the handle 51 and lift the lever 8 rotating it in the direction of the arrow head ( Figure 1 ) . During this operation, first the lever 8 rotates about the pin 33 in relation to the stirrup 33 while the latter remains stationary ; the spring 12 is compressed, therefore, when the spring 12 has reached the maximum possible compression, the subsequent rotation of the lever 8 also rotates the stirrup 30 about the pin 38 ; the rotation of the stirrup 30 produces the translation of the tension rod 14 and the subsequent operation of the hydraulic pump 10 which sucks oil out of the tank 3 and sends it pressurized into the valve 11 ; under the aforedescribed conditions ( the pump 4 not operating, that is to say the vehicle at a stop ), no hydraulic pressure whatsoever operates on the extremity of the shuttle 24 facing the inlet 22 ; vice versa, the pressure produced by the pump 10 operates on the opposite extremity in case of braking and, therefore, the shuttle bucked by the spring 27a moves inside the chamber 27 to go and cooperate with the sealing seat 26 ( with the subsequent closing of the inlet 22 ) and to release the sealing seat 25 with subsequent afflux of the pressurized oil from the inlet 21 which, through the chamber 27, reaches the outlet 23 and gets into the circuit 6 to go and operate the service brakes 7 .

During the lifting motion of the lever 8 the pawl 47 idle-falls on the sector gear 46 and, when the user releases the lever 8, remains fixed in position between two adjacent teeth keeping the lever 8 locked in the position reached either against the elastic thrust of the spring 12 or against the reaction thrust exerted by the pump 10 on the rod 13, thus ensuring the indefinite prolongation of the braking operation. In case the vehicle is at a stop and should be kept in that state for a rather long time, even the presence of possible blow-bys in the circuit 6 does not reduce the hydraulic pressure in it and, therefore, does not reduce the braking operation .Actually, if possible blow-bys produce a transitory decrease of pressure in the circuit 6, the reaction thrust exerted by the pump 10 on the rod 13 and which operates on the stirrup 30 so as to rotate it towards the initial position will, consequently, also decrease ; therefore, the thrust exerted by the spring 12, which got preloaded during the initial phase of the lever 8 operation, is not anymore balanced by the opposite thrust exerted by the pump 10 ; therefore, the spring 12 tends to spring off and, not being able to rotate the lever 8 towards the initial position since the lever 8 is holded by the rachet gear 9, produces, as a reaction, a subsequent rotation of the stirrup 30 in the opposite direction, which increases the spacing angle with the lever 8 producing an additional translation of the tension rod 14 sufficient to operate the pump 10 so as to restore the original hydraulic pressure in the circuit 6 .

To disengage the emergency brake, the user operates on the pusher 49, just as with the well-known hand brakes, producing its moving backward against the action of the spring 50 .

The advantages of the invention are apparent from the aforegoing description . Thanks to the structure described the service brakes of the vehicle wheels, in the case in point the rear wheels, can be directly operated by hand, moreover by means of a tradition-type lever, with no need of complex mechanical driving gears or to operate in parallel with the hydraulic drive .

## Claims

1. Device for the emergency and parking braking of a vehicle, of the type comprising a hydraulic pump (10) operated by control means (8) and connected by means of a three-way valve (11) with a braking circuit of the vehicle; characterized in that the device further comprises a control lever (8) mountable in the passenger compartment of the vehicle and liftable by hand for operating said pump (10), a rachet gear (9) engageable through the lifting of said lever and arranged to prevent the lever (8) from lowering, and means to disengage said rachet gear; said lever (8) being liftable against the action of elastic means (12) fitted so as to buck said rachet gear and the pump being connected by means of said three-way valve (11) with the braking circuit of one axis (6) of the vehicle; and in that the lever (8) is idle-hinged within a U-shaped stirrup (30) hinge-linked, at the open part, with a head of a control tension rod (14) of the pump, said U-shaped stirrup (30) being in its turn idle-hinge-mounted, coaxial to said lever, on a fixed stirrup (34) rigidly provided with a sector gear of said rachet gear (9) engaging with a corresponding pawl (47) laterally borne by said lever (8); between the latter and a shoulder (44) rigid with the U-shaped stirrup near said open part of the stirrup there being pack-inserted a spring (44) able to keep the lever (8) and the U-shaped stirrup (30) parted.

2. Device as claimed in claim 1, characterized in that said hydraulic pump (10) comprises a slidable control rod (14) linked to said lever in an articulated manner, a feed connection (15) connected in deviation with an oil tank of a main circuit (2) of a service braking system of the vehicle, and a delivery (16) connected, through said three-way valve (11), with said braking circuit (6) which is part of said service braking system (1) and is connected, still through said three-way valve (11), with said main circuit (2) of the service braking system.

3. Device as claimed in claim 2, characterized in that said three-way valve (11) comprises a connecting body which presents two opposed inlets (21, 22) respectively linked to said main braking circuit and to the delivery of said hydraulic pump (10) and an outlet (23) linked to said braking circuit of an axis of the vehicle (6) and a shuttle (24) mobile between said body owing to the difference in pressure between said two inlets (21, 22) and able to selectively connect said outlet with one of said inlets.

## Patentansprüche

1. Not- und Feststellbremsvorrichtung eines Fahrzeugs von der Art, die eine Hydropumpe (10) umfaßt, die von einem Bedienungshebel (8) betätigt wird und über ein Dreiwegeventil (11) mit einem Bremskreis des Fahrzeugs verbunden ist, dadurch gekennzeichnet, daß die Vorrichtung außerdem einen im Fahrgastraum des Fahrzeugs montierbaren und von Hand anhebbaren Bedienungshebel (8) zur Betätigung der Pumpe (10), ein Rastgetriebe (9), das durch das Anheben des Hebels aktivierbar ist und ein Absenken des Hebels (8) verhindert, und Mittel zum Lösen des Rastgetriebes aufweist, wobei der Hebel (8) gegen den Widerstand eines Spanngliedes (12) anhebbar ist, das so angeordnet ist, daß es in entgegengesetzter Richtung auf das Rastgetriebe und die Pumpe wirkt, die über das Dreiwegeventil (11) mit dem Bremskreis (6) von einer Achse des Fahrzeugs verbunden ist, sowie dadurch, daß der Hebel (8) in einer U-förmigen Konsole (30) mit Leerhub schwenkbar gelagert und am offenen Teil mit dem Kopf einer Zugstange (14) der Pumpe gelenkig verbunden ist, wobei die U-förmige Konsole (30) ihrerseits mit Leerhub schwenkbar in einer feststehenden Konsole (34) gelagert ist, die mit einem starren Zahnsegment des Rastgetriebes (9) versehen ist, das mit einer entsprechenden, seitlich am Hebel (8) vorstehenden Sperrklinke (47) zusammenwirkt und wobei zwischen letzterer und einem Anschlag (44), der mit der U-förmigen Konsole nahe am offenen Teil der Konsole fest verbunden ist, eine Feder (12) eingespannt ist, die in der Lage ist, den Hebel (8) und die U-förmige Konsole (30) auseinanderzuhalten.

2. Vorrichtung nach Anspruch 1, dadurch gekennzeichnet, daß die Hydropumpe (10) umfaßt
- eine verschiebbare Steuerstange (14), die mit dem Hebel gelenkig verbunden ist,
- einen Einlaß-Anschluß (15), der über eine Nebenleitung mit einem Öl-Behälter des Hauptkreises (2) des Betriebs-Bremssystems des Fahrzeugs verbunden ist, und
- einen Auslaßanschluß (16), der über das Dreiwegeventil (11) mit dem Bremskreis (6) verbunden ist, der Teil des Betriebs-Bremssystems (1) ist und ebenfalls über das Dreiwegeventil (11) mit dem Hauptkreis (2) des Betriebs-Bremssystems verbunden ist.

3. Vorrichtung nach Anspruch 2, dadurch gekennzeichnet, daß das Dreiwegeventil (11) umfaßt
- ein Anschluß-Gehäuse mit zwei gegenüberliegenden Einlässen (21, 22), die mit dem Hauptbremskreis bzw. mit dem Auslaß-Anschluß der Hydropumpe (10) verbunden sind,
- einen Auslaß (23), der mit dem Bremskreis (6) einer Achse des Fahrzeugs verbunden ist, und
- einen Pendelkolben (24), der im Gehäuse in Abhängigkeit von der Differenz des Druckes zwischen den beiden Einlässen (21, 22) beweglich und in der Lage ist, den Auslaß wahlweise mit einem der Einlässe zu verbinden.

## Revendications

1. Dispositif pour le freinage de secours et de stationnement d'un véhicule, du type comprenant une pompe hydraulique (10) actionnée par des moyens de commande (8) et connectée par l'intermédiaire d'une vanne à trois voies (11) à un circuit de freinage du véhicule, caractérisé en ce que le dispositif comprend en outre un levier de commande (8) montable dans le compartiment de conduite du véhicule et relevable manuellement pour commander ladite pompe (10), un encliquetage (9) enclenchable par le relevable dudit levier et agencé de manière à empêcher le levier (8) de retomber, et des moyens de libération dudit encliquetage ; ledit levier (8) étant relevable contre l'action de moyens élastiques (12) agencés de manière à bloquer ledit encliquetage, et la pompe étant connectée par l'intermédiaire de ladite vanne à trois voies (11) au circuit de freinage d'un essieu (6) du véhicule ; et en ce que le levier (8) est librement articulé dans un étrier en forme de U (30) relié de façon pivotante, à la partie ouverte, avec une tête d'une tige de tension (14) de commande de la pompe, ledit étrier en U (30) étant lui-même monté de façon librement pivotante, coaxialement au dit levier,sur un étrier fixe (34) présentant rigidement un secteur denté dudit encliquetage (9) qui coopère avec un cliquet correspondant (47) porté latéralement par le dit levier (8) ; un ressort (44), capable d'écarter le levier (8) et l'étrier en U (30) l'un de l'autre, étant inséré en compression entre le levier et un épaulement (44) solidaire de l'étrier en U et situé près de ladite partie ouverte de l'étrier.

2. Dispositif suivant la revendication 1, caractérisé en ce que ladite pompe hydraulique (10) comprend une tige de commande coulissante (14) reliée audit levier d'une manière articulée, une connexion d'alimentation (15) raccordée à un réservoir d'huile en parallèle avec un circuit principal (2) d'un système de freinage de service du véhicule, et une connexion de refoulement (16) connectée, par l'intermédiaire de ladite vanne à trois voies (11), audit circuit de freinage (6) qui fait partis dudit système de freinage de service (1) et est connecté également par l'intermédiaire de ladite vanne à trois voies (11) audit circuit principal (2) du système de freinage de service.

3. Dispositif suivant la revendication 2, caractérisé en ce que ladite vanne à trois voies (11) comprend un corps de connexion qui comporte deux entrées opposées (21,22),respectivement raccordées audit circuit de freinage principal et au refoulement de ladite pompe hydraulique (10), et une sortie (23) raccordée audit circuit de freinage d'un essieu du véhicule (6), et un tiroir (24) mobile à l'intérieur dudit corps du fait de la différence de pression entre les dites deux entrées (21,22) et permettant de connecter sélectivement ladite sortie avec une desdites entrées.
